# EUROPEAN PATENT SPECIFICATION

(11) **EP 2 097 300 B1**
(45) Date of publication and mention of the grant of the patent: **06.09.2017**
(21) Application number: 07874418.2
(22) Date of filing: 20.12.2007
(51) Int. Cl.: B60T 8/17, B60T 8/88

(54) **Electric brake system for an aircraft**
Elektrisches Bremssystem für ein Flugzeug
Système de freinage électrique pour avion

(30) Priority: 21.12.2006 US 614951
(43) Date of publication of application: 09.09.2009
(73) Proprietor: The Boeing Company, Chicago, IL 60606-1596 (US)
(72) Inventor: GORANSON, Pete T., Everett, Washington 98205 (US); ADKINSON, Daniel W., Woodinville, Washington 98072 (US); ANACKER, Gregory T., Shoreline, Washington 98133 (US)
(74) Representative: Boult Wade Tennant
(86) International application number: PCT/US2007/088464
(87) International publication number: WO 2008/115306

(56) References cited:
- EP-A- 1 547 918
- EP-A- 1 867 539
- EP-B- 1 198 384
- WO-A-01/15948

## Description

### TECHNICAL FIELD

Embodiments of the present disclosure relate generally to an electric brake system for an aircraft. More particularly, embodiments of the present disclosure relate to an electric brake actuator overdrive feature within the electric brake system of an aircraft.

### BACKGROUND

Many aircraft utilize brake systems having brake mechanisms that are controlled by direct cable or hydraulic control architectures. Modem aircraft are beginning to replace conventional cable controlled and hydraulically actuated aircraft brake systems with electronically controlled and electrically actuated brake systems. An aircraft brake system can be designed with safety features that preserve braking performance if one or more brake actuators are failed or deactivated. Moreover, an aircraft brake system should include operational systems, with sufficient processing redundancy to provide reliable brake control and robustness.

WO 01/15948 describes an electrically actuated braking system in which a failed electromechanical actuator is inhibited and compensated for with other electromechanical actuators.

EP 1 198 384 describes a braking system where two actuator controllers are arranged to provide redundancy in response to a brake clamp force command signal.

### BRIEF SUMMARY

An electric brake system suitable for use with an aircraft may include an electric brake actuation overdrive system that preserves braking performance in the event of one or more failed or deactivated electric brake actuators (EBAs). The electric brake overdrive system can be integral to the electric brake actuator controller (EBAC) that controls and monitors performance of the electric brake actuators EBAs. The governing EBAs in turn provide the necessary clamping force to achieve wheel braking.

In one embodiment, the EBAC monitors the EBA parameters (e.g., load, current, and/or motor-position signals) for occurrence of a failure condition, detects a failed EBA based on the EBA parameters, disables the affected EBA, and proportionally overdrives the remaining functional EBAs by an amount partially or fully equivalent to the lost clamping force of the failed EBA on any wheel-brake.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of embodiments of the present disclosure may be derived by referring to the detailed description and claims when considered in conjunction with the following figures, wherein like reference numbers refer to similar elements throughout the figures.
FIG. 1 is a schematic representation of an aircraft electric brake system;
FIG. 2 is a diagram that illustrates a portion of an electric brake system; and
FIG. 3 is a flow chart that illustrates an electric brake actuation overdrive-initiation process for an aircraft electric brake system.

### DETAILED DESCRIPTION

The following detailed description is merely illustrative in nature and is not intended to limit the embodiments of the disclosure nor the application and uses of such embodiments. Furthermore, there is no intention to be bound by any expressed or implied theory presented in the preceding technical field, background, brief summary or the following detailed description.

Embodiments of the disclosure may be described herein in terms of functional and/or logical block components and various processing steps. It should be appreciated that such block components may be realized by any number of hardware, software, and/or firmware components configured to perform the specified functions. For example, an embodiment of the disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with a variety of different aircraft brake systems and aircraft configurations, and that the system described herein is merely one example embodiment of the disclosure.

For the sake of brevity, conventional techniques and components related to signal processing, aircraft brake systems, brake system controls, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the disclosure.

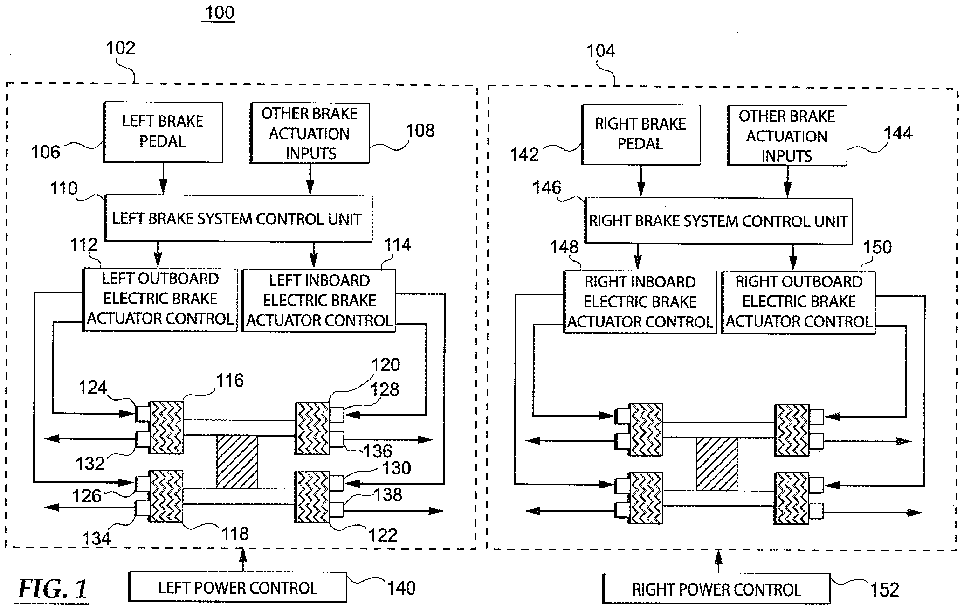

The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although FIGS. 1-2 depict example arrangements of elements, additional intervening elements, devices, features, or components may be present in an embodiment of the disclosure.

An aircraft as described herein employs an electric brake system, which may be powered by any suitable power supply, such as an active aircraft power supply that is operational when the aircraft engine(s) are running or a main aircraft battery. The electric brake control system can include an electric brake actuation overdrive system feature. The electric brake actuation overdrive system feature is suitably configured to preserve braking performance in the event of one or more failed or deactivated brake actuators by proportionally overdriving remaining operating EBAs by an amount equivalent to the lost clamping force of the failed EBA/EBAs. Thus, even if one or more actuators are deactivated, the airplane can be dispatched without any operational restrictions.

FIG. 1 is a schematic representation of an example embodiment of an electric brake system 100 for an aircraft. In the example embodiment shown in FIG. 1, the aircraft employs a left electric brake subsystem architecture 102 and a right electric brake subsystem architecture 104, which are similarly configured. The terms "left" and "right" refer to the port and starboard of the aircraft, respectively. In practice, the two subsystem architectures 102/104 may be independently controlled in the manner described below. For simplicity, only the left electric brake subsystem architecture 102 is described in detail below. It should be appreciated that the following description also applies to the right electric brake subsystem architecture 104.

For this example deployment, left electric brake subsystem architecture 102 generally includes: a brake pedal 106; other brake actuation inputs (e.g., autobrake system or parking brake) 108; a brake system control unit (BSCU) 110 coupled to brake pedal 106 and to other brake actuation inputs 108; an outboard electric brake actuator controller (EBAC) 112 coupled to BSCU 110; an inboard EBAC 114 coupled to BSCU 110; an outboard wheel-brake group that includes a forward wheel-brake 116 and an aft wheel-brake 118; an inboard wheel-brake group that includes a forward wheel-brake 120 and an aft wheel-brake 122; electric brake mechanisms (not shown in FIG. 1) which include electric brake actuators (EBAs) 124/126/128/130 that are coupled to the EBACs, and remote data concentrators 132/134/136/ /138 located in the vicinity of the wheels or wheel-brakes. Each electric wheel-brake includes at least one electric brake actuator (EBA) that is controlled by the respective EBAC. The EBAs 124/126/128/130 correspond to each wheel-brake of left electric brake subsystem architecture 102. Although not shown in FIG. 1, an embodiment may have more than one electric brake actuator mechanism and more than one remote data concentrator per wheel-brake.

Electric brake system 100 can be applied to any number of electric braking configurations for an aircraft, and electric brake system 100 is depicted in a simplified manner for ease of description. An embodiment of electric brake system 100 as deployed may include any number of BSCUs, any number of EBACs coupled to and controlled by each BSCU, and any number of electric brake mechanisms and any number of EBAs for each wheel-brake (or for each group of wheel-brakes). In operation, electric brake system 100 can independently generate and apply brake actuator control signals for each wheel-brake of the aircraft or concurrently for any group of wheel-brakes.

The elements in left electric brake subsystem architecture 102 can be coupled together using a data communication bus or any suitable interconnection arrangement or architecture. For example, a digital data communication bus or buses may be configured to communicate EBAC control signals from BSCU 110 to the EBACs, to communicate brake mechanism control signals (e.g., actuator control signals) from the EBACs to EBAs, etc. Briefly, BSCU 110 reacts to manipulation of brake pedal 106 and generates control signals that are received by EBACs 112/114. In turn, EBACs 112/114 generate brake actuator control signals that are received by EBAs 124/126/128/130. In turn, EBAs 124/126/128/130 apply clamping force to the wheel-brake 116/118/120/122 to impede or prevent rotation of the respective wheels. These features and components are described in more detail below.

Brake pedal 106 is configured to provide pilot input to electric brake system 100. The pilot physically manipulates brake pedal 106, resulting in deflection or movement (i.e., some form of physical input) of brake pedal 106. This physical deflection is measured from its natural position by a hardware servo, one or more brake pedal sensors, or any equivalent component. This physical deflection measurement is converted into a BSCU pilot command control signal by a transducer or an equivalent component, and sent to BSCU 110. The BSCU pilot command control signal may convey brake pedal sensor data that may include or indicate the deflection position for brake pedal 106, the deflection rate for brake pedal 106, a desired braking condition for EBAs 124/126/128/130, or the like.

Other brake actuation inputs 108 may include input from one or more of the following, without limitation: an autobrake system, an engine thrust lever for the aircraft and any associated sensors and processing logic; a parking brake lever for the aircraft and any associated sensors and processing logic; a landing gear up/down lever for the aircraft and any associated sensors and processing logic; and any other device, component, or subsystem of the aircraft that may have an impact on the operation of the aircraft brake mechanisms. Other brake actuation inputs 108 may control the application of brakes even in the absence of pilot manipulation of brake pedal 106. For example, electric brake system 100 (and BSCU 110 in particular) may be configured to prevent the application of brakes if the thrust lever is not at idle. As another example, electric brake system 100 (and BSCU 110 in particular) may be configured to enable the brake mechanisms whenever the parking brake lever is engaged. As yet another example, electric brake system 100 (and BSCU 110 in particular) may be configured to disable the brake mechanisms when the landing gear lever is in an "up" state (i.e., the landing gear of the aircraft are retracted). In practice, a gear retract braking feature may allow electric brake system 100 to apply the brakes while the landing gear is being retracted and/or for a short time after the landing gear has retracted.

An embodiment of electric brake system 100 may use any number of left BSCUs 110. For ease of description, this example includes only one left BSCU 110. BSCU 110 is an electronic control unit that has embedded software that digitally computes EBAC control signals that represent braking commands. The electrical and software implementation allows further optimization and customization of braking performance and feel if needed for the given aircraft deployment.

BSCU 110 may be implemented or performed with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. A processor may be realized as a microprocessor, a controller, a microcontroller, or a state machine. A processor may also be implemented as a combination of computing devices, e.g., a combination of a digital signal processor and a microprocessor, a plurality of microprocessors, one or more microprocessors in conjunction with a digital signal processor core, or any other such configuration. In one embodiment, BSCU 110 is implemented with a computer processor (such as a PowerPC 555) that hosts software and provides external interfaces for the software.

BSCU 110 monitors various aircraft inputs to provide control functions such as, without limitation: pedal braking; parking brake application; automatic braking; and gear retract braking. In addition, BSCU 110 blends antiskid commands (which could be generated internally or externally relative to BSCU 110) to provide enhanced control of braking. BSCU 110 obtains pilot command control signals from brake pedal 106, along with additional command control signals from other brake actuation inputs 108. BSCU 110 may also receive wheel data (e.g., wheel speed, rotational direction, tire pressure, etc.) from remote data concentrators 132/134/136/138. BSCU 110 processes its input signals and generates one or more EBAC control signals that are received by EBACs 112/114. In practice, BSCU 110 transmits the EBAC control signals to EBACs 112/114 via a digital data bus. In a generalized architecture (not shown), each BSCU can generate independent output signals for use with any number of EBACs under its control.

BSCU 110 is coupled to EBACs 112/114 in this example. Each EBAC 112/114 may be implemented, performed, or realized in the manner described above for BSCU 110. In one embodiment, each EBAC 112/114 is realized with a computer processor (such as a PowerPC 555) that hosts software, provides external interfaces for the software, and includes suitable processing logic that is configured to carry out the various EBAC operations described herein. Each EBAC 112/114 obtains EBAC control signals from BSCU 110, processes the EBAC control signals, and generates the control signals for its associated EBAs.

Notably, the functionality of BSCU 110 and EBACs 112/114 may be combined into a single processor-based feature or component. In this regard, BSCU 110, EBAC 112, EBAC 114, or any combination thereof can be considered to be a brake control architecture for electric brake system 100. Such a brake control architecture includes suitably configured processing logic, functionality, and features that support the brake control operations described herein.

Each wheel may engage an associated electric brake assembly, and each brake assembly may include one or more electric brake actuators. Consequently, braking and parking-brake application for each wheel-brake may be independently and individually controlled by electric brake system 100. Each EBA is suitably configured to receive actuator control signals from its respective EBAC, wherein the actuator control signals influence adjustment of the EBA. In this embodiment, each EBA in electric brake system 100 is coupled to and controlled by an EBAC. In this manner, EBACs 112/114 control the EBAs to apply, release, modulate, and otherwise affect the application of the wheel-brakes. In this regard, EBACs 112/114 generate the EBA control signals in response to the respective EBAC input signals generated by BSCU 110. The EBA control signals are suitably formatted and arranged for compatibility with the particular brake mechanisms utilized by the aircraft. Those skilled in the art are familiar with aircraft brake mechanisms and the general manner in which they are controlled, and such known aspects will not be described in detail here.

The left electric brake subsystem architecture 102 may include or cooperate with a suitably configured power control 140. Power control 140 may be coupled to BSCU 110, to EBACs 112/114 (and/or to other components of electric brake system 100). In this embodiment, power control 140 is suitably configured to provide, apply, remove, switch, or otherwise regulate the operating power for the EBACs and/or the EBAs as needed.

Right electric brake architecture 104 has a structure that is similar to left electric brake subsystem architecture 102 (common features, functions, and elements will not be redundantly described here). For this example deployment, as shown in FIG. 1, right electric brake subsystem architecture 104 includes: a brake pedal 142 that is separate and distinct from brake pedal 106; other brake actuation inputs 144; a BSCU 146; an inboard EBAC 148; an outboard EBAC 150; and a power control 152 that is separate and distinct from power control 140. In practice, one or more of the other brake actuation inputs 144 may be the same as one or more of the other brake actuation inputs 108 in left electric brake subsystem architecture 102. Alternatively, the two sides of electric brake system 100 may utilize separate and distinct components for the other brake actuation inputs 108/144. These various components of right electric brake subsystem architecture 104 are coupled together to operate as described above for left electric brake subsystem architecture 102, however, the right-side processing is preferably independent of the left-side processing.

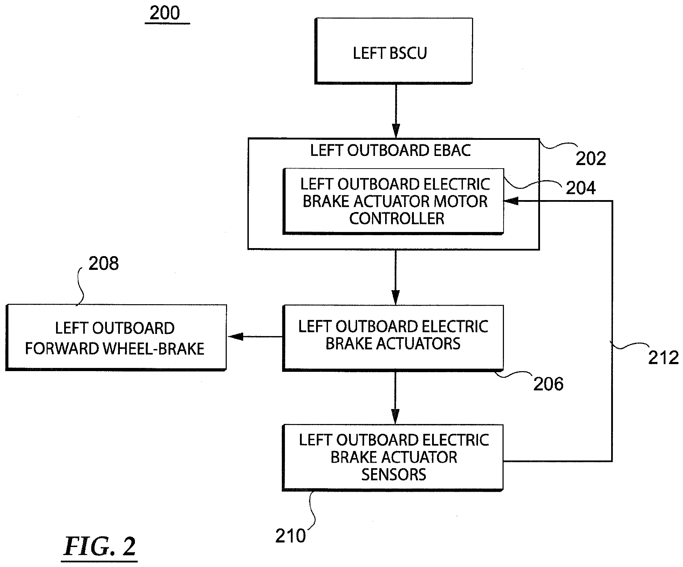

In accordance with one embodiment of an electric brake system for an aircraft, a brake actuator overdrive feature is provided to preserve braking performance with a failed or deactivated brake actuator. A control arrangement or architecture in the electric brake system can be designed to implement such a brake actuation overdrive feature. For example, electric brake system 100 may be configured to support the brake actuation overdrive feature as explained in the context of FIG. 2 below.

FIG. 2 is a diagram that illustrates a portion of an electric brake system 100 configured in accordance with an embodiment of this disclosure. The overdrive feature 200 may be deployed in an electric brake system 100 such as that described above in the context of FIG. 1. Accordingly, certain features, components, and functions within system 200 that are shared with electric brake system 100 will not be redundantly described here.

System 200 for an electric brake actuation overdrive may include; a left outboard EBAC 202, left outboard electric brake actuators (EBAs) 206, a left outboard forward wheel-brake 208, and left outboard EBA sensors 210. The elements in the electric brake actuation system 200 can be coupled together using a data communication bus or any suitable interconnection arrangement or architecture. For example, a digital data communication bus 212 or buses may be configured to communicate left outboard electric brake actuator control signals from the left outboard EBAC 202 to the left outboard EBAs 206, to communicate left outboard electric brake command signals from the left outboard electric actuators 206 to the left outboard EBA sensors 210, and the like.

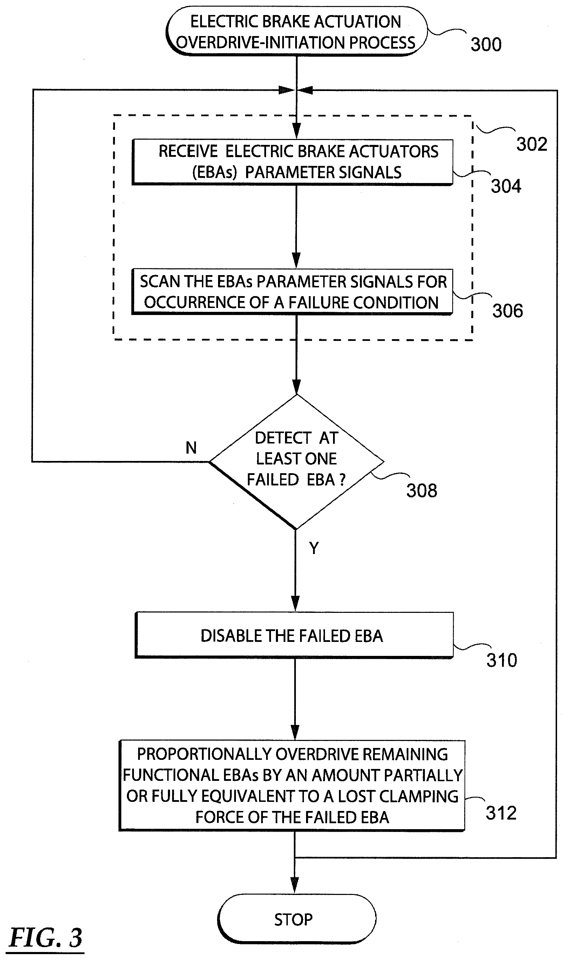

Left outboard EBAC 202 has an architecture similar to left outboard EBAC 112 and may include a left outboard electric brake actuator motor controller 204. The left outboard EBA motor controller (hardware and software) 204 is coupled to the left outboard EBAs 206 and is configured to proportionally overdrive the left outboard EBAs 206 according to an example embodiment of this disclosure as explained in detail in the context of FIG. 3 below. In the example embodiment shown in FIG. 2, left outboard EBA motor controller 204 controls the left outboard electric brake actuators 206 to apply, release, modulate, and otherwise affect the application of the wheel-brakes. In this regard, the left outboard EBA motor controller 204 generates the brake control signals in response to control signals generated by the left BSCU. In practice, the brake control signals influence the actuation of the EBAs 206 in the brake mechanisms as explained in the context of FIG. 3 below.

Left outboard EBAs 206 are coupled to the left outboard EBA motor controller 204 and are configured to provide clamping force on left outboard forward wheel-brake 208. Each left outboard EBA 206 is suitably configured to receive actuator control signals from the left outboard EBA motor controller 204, wherein the actuator control signals influence adjustment of the left outboard electric brake actuator EBA. In this embodiment, each EBA 206 in system 200 is coupled to and controlled by the left outboard EBA motor controller 204.

Left outboard forward wheel-brake 208 is configured to produce brake torque in response to a clamping force provided by the outboard electric brake actuators 206. Those skilled in the art are familiar with the form and construction of the wheel-brake, and such known aspects will not be described in detail here.

Left outboard EBA sensors 210 are coupled to EBAs 206 and are configured to sense EBA parameters. The monitored EBA parameters may be, without limitation, an EBA electric current and/or voltage, an EBA position, an EBA force and the like. The outboard EBA sensor 210 feeds the EBA parameters back to the EBA motor controller 204 via the communication bus 212. The EBA motor controller then monitors health of the left outboard electric brake actuators 206 based upon the EBA parameters as explained in the context of FIG. 3 below.

FIG. 3 is a flow chart that illustrates an electric brake actuation overdrive-initiation process 300 suitable for use in connection with an aircraft electric brake system. The various tasks performed in connection with process 300 may be performed by software, hardware, firmware, or any combination thereof. For illustrative purposes, the following description of process 300 may refer to elements mentioned above in connection with FIGS. 1-2. In embodiments of the disclosure, portions of process 300 may be performed by different elements of the described system, e.g., a BSCU, an EBAC, or the like. It should be appreciated that process 300 may include any number of additional or alternative tasks, the tasks shown in FIG. 3 need not be performed in the illustrated order, and process 300 may be incorporated into a more comprehensive procedure, software or process having additional functionality not described in detail herein.

In connection with process 300, the electric brake actuation overdrive system monitors (reference number 302) EBAs parameters by receiving EBAs parameters signals (task 304) from actuator sensors, and scans the EBA parameters signals (task 306) in a continuous or rapidly sampled manner for occurrence of a failure condition. The monitored EBA parameters signals may be, without limitation, an EBA electric current signal, an EBA voltage signal, an EBA position signal, an EBA load signal and the like. The failure condition may be a partial failure (e.g., loss of some clamping force) or a pending failure. Partial or pending failures may be detected by examination of motor-resolver feedback (no response or sluggish response to input commands); by load-cell feedback (no or inadequate load signal in response to input commands); and/or by measured motor-current level (e.g., high current may be indicative of motor and/or gear-train failure). If process 300 does not detect a failed EBA (inquiry task 308), the electric brake actuator motor controller leads back to task 302 to continue monitoring the EBAs parameters. However, if process 300 detects a failed EBA (inquiry task 308) then EBAC disables the failed EBA (task 310) and proportionally overdrives remaining functional EBAs by an amount fully or partially equivalent to the lost clamping force of the failed EBA (task 312) on the same or other wheel-brakes (i.e. brakes mounted directly fore or aft from the failed EBA). In practice, disabling the failed EBA may be accomplished by inhibiting the motor current to the affected EBA via software control.

In practice, the remaining functional EBAs are overdriven by adjusting electric brake actuator control signals on the affected brake to take into account loss of the clamping force due to the failed EBA. This effectively fully or partially compensates for the failed or disabled EBA. The brake control signals influence the actuation of the EBAs in the brake mechanisms (i.e., the percentage of full clamping force imparted by the electric brake actuators). For example, a brake control signal may command the EBAs to release or apply no clamping force, it may command the EBAs to apply full clamping force, it may command the EBAs to apply some intermediate clamping force, or it may command the EBAs to apply more than the ordinary "full" clamping force. Thus, according to an example embodiment shown in FIG. 3, if an electric brake architecture has four EBAs and one EBA fails, the three operating EBAs are overdriven by about 133% of the normally commanded value to generate clamping force equivalent to four EBAs to fully restore the clamping force on the same or the other wheel-brakes. The example embodiment shown in FIG. 3 can also be utilized to partially compensate for the failed EBA (i.e., partially restore the clamping force) based upon number of EBAs and overdrive capability designed for each EBA. With this approach, because output torque of the affected wheel-brake is maintained at normal levels when the functional EBAs are overdriven, certified airplane braking performance is maintained. Process 300 then leads back to task 304.

In summary, an electric brake system as described herein includes an electric brake actuation overdrive system feature that preserves braking performance with one or more deactivated EBAs. With this approach, airplane braking performance is equivalent to a normal braking condition even with at least one failed or intentionally-deactivated EBA.

While at least one example embodiment has been presented in the foregoing detailed description, it should be appreciated that a vast number of variations exist. It should also be appreciated that the example embodiment or embodiments described herein are not intended to limit the scope, applicability, or configuration of subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. An electric brake system (100) for an aircraft, the electric brake system (100) comprising:
a wheel-brake (208) configured to produce brake torque in response to a clamping force;
a plurality of electric brake actuators EBAs (206) configured to provide the clamping force for the wheel-brake (208);
a plurality of sensors (210) coupled to the EBAs (206) and configured to sense EBA parameters;
an EBA motor controller (204) coupled to the EBAs (206), wherein the EBA motor controller (204) is configured to:
monitor the EBA parameters for occurrence of a failure condition (302), wherein the EBA parameters comprise an EBA position;
detect at least one failed EBA based upon the failure condition (308);
disable the at least one failed EBA (310); and
proportionally overdrive remaining functional EBAs by an amount partially or fully equivalent to a lost clamping force of the at least one failed EBA (task 312) on any wheel-brake (208).

2. A system according to claim 1, wherein the EBA parameters comprise an EBA electric current.

3. A system according to claim 1, wherein the EBA parameters comprise an EBA voltage.

4. A system according to claim 1, wherein the EBA parameters comprise an EBA load.

5. A system according to claim 1, wherein the actuator motor controller (204) is configured to monitor the EBA parameters by:
receiving EBA parameter signals (304); and
scanning the EBA parameter signals for occurrence of the failure condition (task 306).

6. A method for providing an electric brake actuation overdrive for an aircraft, the method comprising:
monitoring electric brake actuator EBA parameters for occurrence of a failure condition, wherein the EBA parameters comprise an EBA position;
detecting at least one failed EBA based upon the failure condition;
disabling the at least one failed EBA; and
proportionally overdriving remaining functional EBAs by an amount partially or fully equivalent to a lost clamping force of the at least one failed EBA.

7. A method according to claim 6, wherein the monitoring step further comprises:
receiving EBA parameters signals; and
scanning the EBA parameters signals for occurrence of the failure condition.

8. A method according to claim 7, wherein the EBA parameters signals comprise an EBA electric current signal and an EBA voltage signal.

9. A method according to claim 7, wherein the EBA parameters signals comprise an EBA load signal.

## Patentansprüche

1. Elektrisches Bremssystem (100) für ein Luftfahrzeug, wobei das elektrische Bremssystem (100) aufweist:
eine Radbremse (208), die ausgebildet ist, in Reaktion auf eine Klemmkraft ein Bremsmoment zu erzeugen;
mehrere elektrische Bremsaktoren EBAs (206), die ausgebildet sind, die Klemmkraft für die Radbremse (208) aufzubringen;
mehrere Sensoren (210), die mit den EBAs (206) verbunden und zum Erfassen von EBA-Parametern ausgebildet sind;
eine EBA-Motorsteuerung (204), die mit den EBAs (206) verbunden ist, wobei die EBA-Motorsteuerung (204) ausgebildet ist zum:
Überwachen der EBA-Parameter auf ein Auftreten einer Fehlerbedingung (302), wobei die EBA-Parameter eine EBA-Position umfassen;
Erfassen zumindest eines fehlerhaften EBA auf Basis der Fehlerbedingung (308);
Deaktivieren des zumindest einen fehlerhaften EBA (310); und proportionales Übersteuern der verbleibenden funktionierenden EBAs um einen Betrag, der der fehlenden Klemmkraft des zumindest einen fehlerhaften EBA (Schritt 312) ganz oder teilweise entspricht, an jeder Radbremse (208).

2. System nach Anspruch 1, wobei die EBA-Parameter einen elektrischen EBA-Strom umfassen.

3. System nach Anspruch 1, wobei die EBA-Parameter eine EBA-Spannung umfassen.

4. System nach Anspruch 1, wobei die EBA-Parameter eine EBA-Last umfassen.

5. System nach Anspruch 1, wobei die Aktormotorsteuerung (204) zum Überwachen der EBA-Parameter ausgebildet ist durch:
Empfangen von EBA-Parametersignalen (304); und
Scannen der EBA-Parametersignale auf ein Auftreten der Fehlerbedingung (Schritt 306).

6. Verfahren zum Bereitstellen einer elektrischen Bremsaktorübersteuerung für ein Luftfahrzeug, wobei das Verfahren umfasst:
Überwachen von elektrischen Bremsaktor (EBA)-Parametern auf ein Auftreten einer Fehlerbedingung, wobei die EBA-Parameter eine EBA-Position umfassen;
Erfassen zumindest eines fehlerhaften EBA auf Basis der Fehlerbedingung;
Deaktivieren des zumindest einen fehlerhaften EBA; und
proportionales Übersteuern der verbleibenden funktionierenden EBAs um einen Betrag, der der fehlenden Klemmkraft des zumindest einen fehlerhaften EBA ganz oder teilweise entspricht.

7. Verfahren nach Anspruch 6, wobei der Überwachungsschritt ferner umfasst:
Empfangen von EBA-Parametersignalen; und
Scannen der EBA-Parametersignale auf ein Auftreten der Fehlerbedingung.

8. Verfahren nach Anspruch 7, wobei die EBA-Parametersignale ein elektrisches EBA-Stromsignal und ein EBA-Spannungssignal umfassen.

9. Verfahren nach Anspruch 7, wobei die EBA-Parametersignale ein EBA-Lastsignal umfassen.

## Revendications

1. Système de frein électrique (100) pour un avion, le système de frein électrique (100) comprenant :
un frein de roue (208) configuré pour produire un couple de freinage en réponse à une force de serrage ;
une pluralité d'actionneurs de frein électrique EBA (206) configurés pour fournir une force de serrage pour le frein de roue (208) ;
une pluralité de capteurs (210) couplés aux EBA (206), est configuré pour détecter des paramètres EBA ;
un contrôleur de moteur EBA (204) couplé aux EBA (206), dans lequel le contrôleur de moteur EBA (204) est configuré pour :
surveiller les paramètres EBA quant à l'apparition d'un état de défaillance (302), dans lequel les paramètres EBA comprennent une position EBA ;
détecter au moins un EBA défectueux sur la base de l'état de défaillance (308) ;
désactiver le au moins un EBA défectueux (310) ; et
surmultiplier proportionnellement les EBA fonctionnels restants selon une quantité partiellement ou totalement équivalente à une force de serrage perdue du au moins un EBA défectueux (tâche 312) sur tout frein de roue (208).

2. Système selon la revendication 1, dans lequel les paramètres EBA comprennent un courant électrique EBA.

3. Système selon la revendication 1, dans lequel les paramètres EBA comprennent une tension EBA.

4. Système selon la revendication 1, dans lequel les paramètres EBA comprennent une charge EBA.

5. Système selon la revendication 1, dans lequel le contrôleur de moteur d'actionneur (204) est configuré pour surveiller les paramètres EBA en :
recevant des signaux de paramètres EBA (304) ; et
balayant les signaux de paramètres EBA quant à l'apparition de l'état de défaillance (tâche 306).

6. Procédé pour fournir une surmultiplication d'actionnement de frein électrique pour un avion, le procédé comprenant les étapes consistant à :
surveiller les paramètres d'actionneur de frein électrique EBA quant à l'apparition d'un état de défaillance, les paramètres EBA comprenant une position EBA ;
détecter au moins un EBA défectueux sur la base de l'état de défaillance ;
désactiver le au moins un EBA défectueux ; et
surmultiplier proportionnellement les EBA fonctionnels restants selon une quantité partiellement ou totalement équivalente à une force de serrage perdue du au moins un EBA défectueux.

7. Procédé selon la revendication 6, dans lequel l'étape de surveillance comprend en outré :
la réception de signaux de paramètres EBA ; et
le balayage des signaux de paramètres EBA quant à l'apparition de l'état de défaillance.

8. Procédé selon la revendication 7, dans lequel les signaux de paramètres EBA comprennent un signal de courant électrique EBA et un signal de tension EBA.

9. Procédé selon la revendication 7, dans lequel les signaux de paramètres EBA comprennent un signal de charge EBA.
